Europäisches Patentamt

European Patent Office

Office européen des brevets

(11) Publication number: **0 132 500**
**B1**

(12) **EUROPEAN PATENT SPECIFICATION**

(45) Date of publication of patent specification: **03.06.87**

(21) Application number: **84103139.6**

(22) Date of filing: **22.03.84**

(51) Int. Cl.⁴: **E 04 D 5/14, F 16 B 5/06**

(54) **Mechanical fastening system.**

(30) Priority: **25.07.83 US 516622**

(43) Date of publication of application:
**13.02.85 Bulletin 85/07**

(45) Publication of the grant of the patent:
**03.06.87 Bulletin 87/23**

(84) Designated Contracting States:
**BE CH DE FR GB IT LI NL SE**

(56) References cited:
**DE-A-2 529 575**
**DE-U-7 823 881**
**FR-A-1 467 374**
**FR-A-2 238 078**
**US-A-3 757 479**

(73) Proprietor: **THE FIRESTONE TIRE & RUBBER COMPANY**
**1200 Firestone Parkway**
**Akron, Ohio 44317 (US)**

(72) Inventor: **Yang, James H.C.**
**3171 Warren Road**
**Cleveland Ohio 44111 (US)**
Inventor: **Tomaszewski, Walter**
**6204 Ronald Street, N.W.**
**Canton Ohio 44718 (US)**

(74) Representative: **von Raffay, Vincenz, Dipl.-Ing. et al**
**Patentanwälte Raffay, Fleck & Partner Postfach 32 32 17**
**D-2000 Hamburg 13 (DE)**

## Description

The invention relates to an attachment device according to the preamble of claim 1.

Such a device is known from MARTINEZ, U.S. Patent US—A—3,757,479. It discloses a mirror frame having an external channel surrounding the mirror into which a flexible strip formed from a flexible resilient synthetic plastic or rubber is to be inserted in order to attach mirror sheet to the frame. The flexible strip is a continuous strip which fits about the frame; it is initially bent into a rectangular shape, and is illustrated in its normal, V-shaped condition. A channel groove is mitered and has an arcuate inner surface which is complementary to one arcuate outer end of the flexible strip, which is rounded and which has substantially the same radius as each undercut portion of groove. Wings are pressed so as to approach one another, and then inserted into the mitered portions of channel. Once the wing edges contact the internal undercut surfaces of channel, the strip undergoes a snap or toggle action, and can neither come loose nor come out of the groove. The toggle action depends upon the normal width of the strip, when it is not compressed being greater than the normal width of the strip when it is in the groove. This is because the strip is flatter when in the groove than in its normal, unflexed inverted V-shape. The strip is therefore in compression when it is in the groove because it is flatter in the groove than when in its normal unconstricted condition. The inclined surfaces prevent the strip from narrowing, and prevent it from increasing its angularity when in the groove.

In fact, the retaining strip is in compression, when it is serving to retain the mirror sheet against the entire inner surface of slot 25. Thus, it would not be capable of retaining more than one sheet within a channel, as insert member 14a of the present invention is capable of doing. Nor would it be able to do so when in a relaxed state, as defined by the present claims.

MARTINEZ essentially requires that the undercut channel portions and ends of strip, be complementarily configured in order to securely retain the mirror sheet within the channel.

The further prior art is described as follows:

A large number of commercial and factory or plant roofs are of a flat roof design wherein the roofing material itself is often of a build-up asphalt and, in more modern systems, of a single ply EPDM elastomeric sheet or membrane. In terms of securing a single ply EPDM membrane to the roof itself, one common design utilizes a mechanical ballast system that uses a layer of stone over the membrane. While the ballast system is least expensive, it has the disadvantage of being quite heavy (ten pounds per square foot) thus requiring a heavy roof support structure and, in addition, the roof slope cannot exceed 10°.

Adhered roof membrane retention systems suffer from a cost penalty while mechanical fastening systems generally require a fixation to the roofing substrate by metal fasteners with metal or rubberized nailing strips.

Additional sealing strips or caps are then required to keep the punctured membrane water tight. Such installations are cumbersome as well as time-consuming in addition to violating the integrity of the membrane itself.

The prior art construction set forth in Netherlands Patent NL—A—7,906,086 (corresponding to DE—U—7823881) to Agro discloses a fixture arrangement for foilsheets for the erection of roof coverings and the like which comprises a rail with an approximately C-shaped profile. This rail has a smooth back and top and bottom grooves for a clamp frame which is flat on one side. The width of the frame is greater than the distance between the edges of the frame guide grooves in the rail and smaller or equal to the distance between the edge of the lower guide groove and the top of the uppermost guide groove.

French Patent FR—A—2,263,407 to Hirota appears to disclose an apparatus for maintaining a soft sheeting member C on a structural greenhouse framework. This apparatus incorporates a substantially zig-zag spring which is positioned within a diverging channel of a retainer. The spring securely retains the flexible membrane C within this channel.

Austrian Patent AU—A—216,192 to Fural appears to disclose a structure having a flexible membrane positioned thereon wherein the membrane extends over a reverse-tapered ridge and is maintained thereon by a fastening element which incorporates pivotally hinged members and a locking element wherein these members fit over the ridge and the flexible membrane.

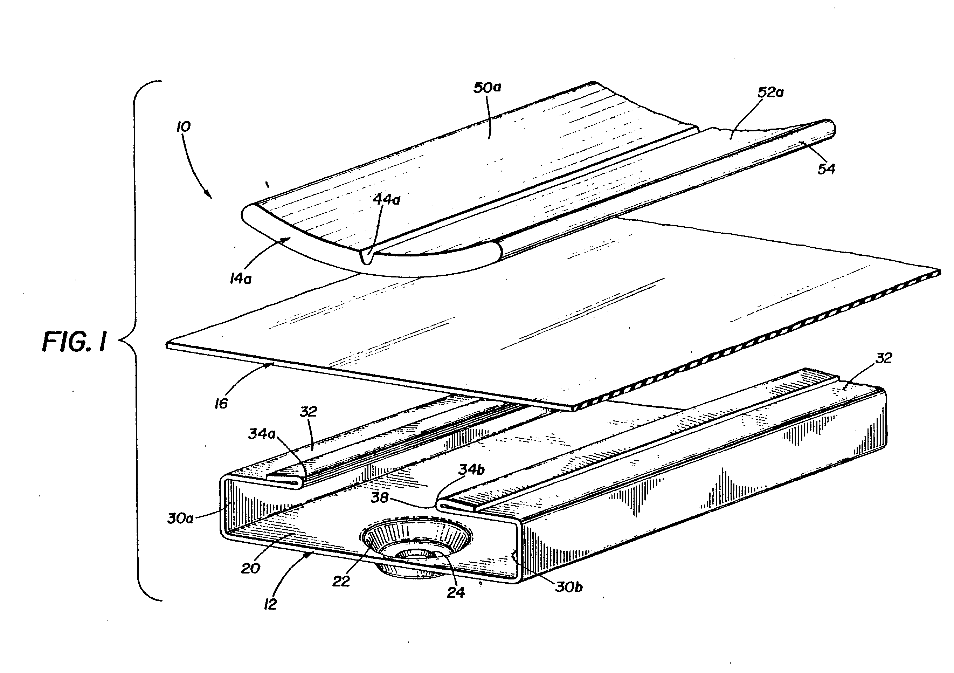

U.S. Patent US—A—4,170,810 to Peleg discloses an apparatus for securing a flexible sheet to building structures wherein, as best shown in Fig. 1, a substantially U-shaped channel member is used to receive the flexible membrane. Two engaging-members are inserted into the channel member, over the flexible member, to tightly clamp the sheet against the channel member.

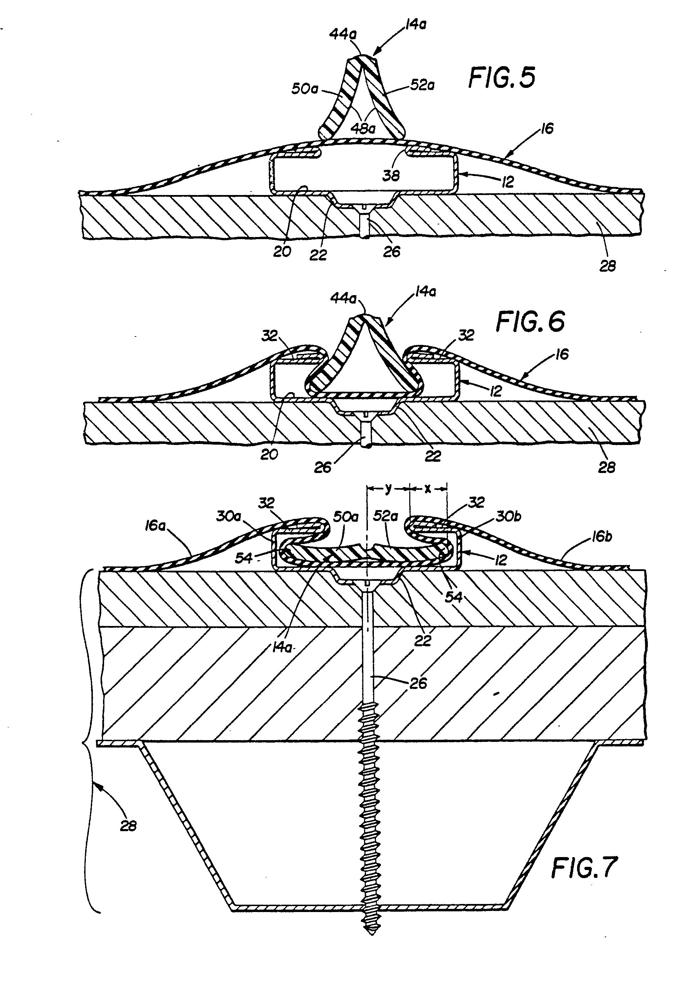

U.S. Patent US—A—4,189,880 to Ballin discloses an apparatus for attaching a plastic film along the peripheral edge of the support frame by a spline. As best shown in Figs. 5a and 5b, a plastic sheet is attached to a window by placing it within the channel member and after such placement a spline, preferably formed of a semi-rigid plastic material, is inserted into the channel. After insertion it forces the adjacent walls outwardly into a deformed position but once fully inserted the member is securely held between the channel and the spline member.

French Patent FR—A—1,467,374 to Buordelot appears to disclose a flexible strip with a groove thereon that apparently functions to facilitate entry into a rigid C-shaped channel to fixedly retain the strip therein.

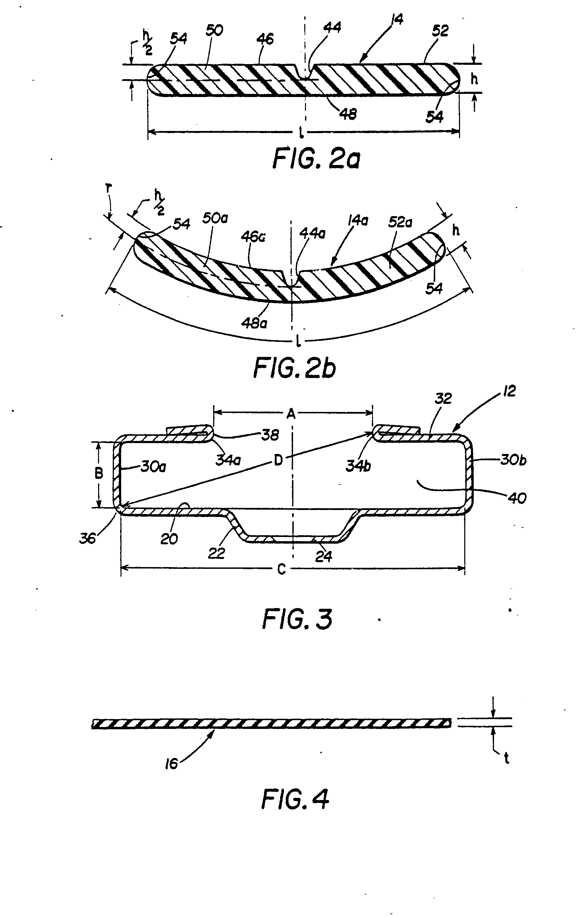

U.S. Patent US—A—4,234,035 to Babbs in Figs. 1 and 2 discloses a device for holding trim to upholstered furniture wherein a semi-rigid U-shaped member is attached to the chair and a contoured flexible strip is wedged thereinto. The strip utilizes a pair of ribs 13 that are spaced apart in order to give the strip a gap or track.

U.S. Patent US—A—3,681,887d to Loew discloses a decorative trim strip for an automobile. The strip in its natural state, i.e. before insertion into the recipient channel, appears to have a groove on the outer surface running longitudinally down the strip. Both the channel and the locking strip are composed of a flexible material.

U.S. Patent US—A—3,581,848 to Wiele discloses a device for attaching a flexible sheet to a rigid structure which can be used, for example, in awnings. The device incorporates a flexible locking strip having a groove thereon which enables a locking strip to hinge or bend inwardly.

German Patent Publication DE—A—2,433,669 pertains to a device for securing loosely placed roofing membranes wherein a cone-shaped base member is first attached to the roof and the membrane is secured between the base member and a top cap member yieldingly fitting into a restricted bore in the base member. A retaining member is then inserted into a central aperture of the cap member to secure the cap member to the base member.

Thus, it is the aim of the present invention to provide a solution to the prior art problems and the previously-discussed prior art constructions by permitting attachment of a flexible sheet or membrane to a substrate or support without either press fitting or puncturing the membrane.

This aim is solved by the above first mentioned attachment device which is characterized by the features of the characterizing part of claim 1.

The attachment device of the present invention mechanically secures a flexible sheet or membrane to a channel member, having a central longitudinal slot, via a flexible, resilient insert member wherein the channel member is of a generally rectangular form in transverse cross-section.

The insert member utilized for retaining the flexible sheet is made of a flexible resilient material and has a central longitudinal flex notch in its top surface wherein the flex notch serves to define two adjacent wing portions that permit the temporary elastic deformation of the insert member into an inverted V-shape so as to allow insertion of the insert member, together with the flexible sheet, into the channel member.

The insert member may be of a generally rectangular form in a transverse cross-section but is preferably curved, concave in shape, in a transverse cross-section.

The insert member flexible hinge notch also acts as a hinge member after being inserted into the channel member so that, upon the application of tensile forces to the flexible sheet, the insert member tends to assume its free-state shape which in turn enhances its retention capabilities within the channel member.

The flexible insert member is defined as having three distinct positions: a first unflexed position; a second flexed position; and a third substantially unflexed position. The strip is in a substantially flat position in the channel. It serves to retain at least one rubber sheet within the channel simply by the frictional forces between the insert member and the rubber sheet, which is pressed against one inner surface of channel.

This is a totally different retaining action than the over center toggle action exerted by the device of MARTINEZ.

Relationships pertaining to channel member and insert member dimensions are set forth together with ratios and several equations to fully define the invention.

The method for mechanically securing the flexible sheet within the channel member, via the flexible resilient insert member, includes the steps of temporarily elastically deforming the insert member into an inverted V-shape; placing the deformed insert member, together with the flexible sheet, through the channel member slot; and flattening the deformed insert member, thereby causing it to substantially return to its original shape so as to frictionally and yet non-bindingly retain the sheet within the channel member.

The advantages of the present invention will become more readily understood by persons skilled in the art when following the best mode description in conjunction with the several drawings.

BRIEF DESCRIPTION OF THE DRAWINGS

Fig. 1 is an exploded view, in enlarged perspective, of the mechanical fastening system of the present invention.

Fig. 2a is a cross-sectional view of the flat insert member of the present invention in its uninstalled or free form.

Fig. 2b is a view similar to that of Fig. 2a but showing the preferred curved insert member.

Fig. 3 is a cross-sectional view of the channel member of the present invention.

Fig. 4 is a cross-sectional view of the flexible sheet that is retained by the attachment device of the present invention.

Fig. 5 is a cross-sectional view of the channel member, flexible sheet and insert member, wherein the flexible sheet extends over the channel member and the insert member has been deformed into an inverted V-shape to permit insertion thereof into the channel member.

Fig. 6 is a view similar to that of Fig. 5 but showing the flexible sheet and insert member partially inserted within the channel member prior to pushing down the apex of the insert member.

Fig. 7 is a view similar to Fig. 6 but showing the insert member fully inserted and securing the flexible sheet within the channel member.

BEST MODE FOR CARRYING OUT THE INVENTION

Referring now to the drawings, specifically Fig. 1, there is illustrated an exploded view, in enlarged perspective of the attachment device 10 of the present invention. Attachment device 10, which basically includes channel member 12 and insert member 14, is utilized for securing a portion of a flexible sheet 16, interposed therebetween, in a manner to be described hereinafter.

Channel member 12, as best seen in Figs. 1 and 3 and usually of a rigid, preferably metal construction, is of generally rectangular form in transverse cross section (see Fig. 3) having a substantially flat bottom wall 20 which in turn is provided with a plurality (one shown) of longitudinally spaced outwardly directed protrusions or recesses 22 that are provided with a central aperture 24, the latter permitting the partial passage therethrough of a fastener, such as 26, shown in Figs. 5—7. The ends of channel bottom wall 20 merge into opposed, similarly projecting sidewalls 30a, 30b, which in turn merge into inwardly converging spaced top wall 32, parallel to bottom wall 20, whose opposite inner but spaced smooth edges 34a, 34b serve to define a constricted central longitudinal slot or opening 38.

The cross sectional area 40 within channel member 12 (excluding protrusions 22) as best seen in Fig. 3, can be defined as having a predetermined width C (between opposed walls 30a, 30b) a predetermined height B (between bottom and top walls 20, 32 respectively), with the opening in top wall 20 (slot 38) being of a predetermined width A.

In order to permit the insertion of sheet 16 into the interior of channel member 12, sheet 16 must be at least flexible and is preferably elastic. Sheet or membrane 16 may, for example as shown in Fig. 4, be EPDM (Ethylene Propylene Diene Monomer) roofing sheeting having a predetermined thickness t.

Turning now to insert member 14, best seen in Figs. 1, 2a and 2b, it is preferably constructed of a flexible resilient material such as for example Sentoprene® 103—40, a thermoplastic rubber distributed by the Monsanto Company, Rubber Chemical Division, in Akron, Ohio. Other plastic, elastomeric or rubber-type materials can also be utilized. Insert member 14, which is either flat, i.e., of generally rectangular form in transverse cross-section (Fig. 2a) or preferably of generally curved form (Fig. 2b) in a transverse cross section, has a central longitudinal flexible hinge notch 44 on its top surface 46 that serves to define two adjacent substantially similar wing portions 50, 52. The depth of flex notch 44 is approximately one-half of the predetermined thickness h of insert member 14, with the ends 54, the latter being smoothly radiused into top and bottom surfaces 46, 48 respectively. The preferred radius of ends 14 is about one-half h.

The lateral or transverse extent of insert member 14 has a predetermined extent I. As noted, Fig. 2a discloses insert member 14 that is generally flat in transverse cross-section, whereas Fig. 2b shows a preferred insert member 14a that is generally concavely curved in a transverse cross-section. To the extent that member 14a is the same as previously described member 14, reference is hereby made to this preceding description, with like reference numerals being followed by the suffix a. Naturally, top and bottom surfaces 46a, 48a, respectively are concave as are adjacent wing portions 50a, 52a and, the transverse extent I of course represents the arc length of member 14a. In addition, insert member 14a has a predetermined radius of curvature.

Flex notch 44 not only serves to define the two adjacent wing portions 50, 52 but also permits the temporary elastic deformation of insert member 14 into an inverted V-shape for insertion of member 14, together with flexible sheet 16, into channel member 12 in the manner to be described with reference to Figs. 5, 6 and 7.

Prior to the description relative to the insertion of insert member 14a and flexible sheet 16 into channel member 12, the relationships between previously discussed dimensions A, B, and C, are governed by the following equations:

The nominal channel slot width (A) complies with the equation:

$$(1) \quad A = 2 \cdot I - C - K_3 h$$

wherein:

I = nominal transverse extent of the insert member

C = nominal channel width of the channel member

h = nominal thickness of the insert member

$K_3$ = a material constant of the insert member. This constant is a preferably experimentally determined dimensionless number related to the modulus of elasticity and stiffness of the material from which the insert member is made. The stiffer the material, the shorter need be the portion of the insert member wing portion, represented by dimension x in Fig. 7, supported or covered by channel member top wall 32, relative to the unsupported wing portion, represented by dimension y in Fig. 7. In one example, the solving of equation (1) for $K_3$, using actual physical dimensions and the previously-noted Sentoprene® material, the value of $K_3$ was determined to be 4.64.

The nominal channel height (B) complies with the equation:

$$(2) \quad B = h + 4t + K_1$$

wherein:

h = nominal dimensional thickness of the insert member

t = nominal thickness of the flexible sheet

$K_1$ = dimensional manufacturing and clearance tolerances (such as for example 0.0254 to 0.0762 cm (0.01/0.03")).

The nominal channel width (C) complies with the equation:

$$(3) \quad C = I + 4t + K_2$$

wherein:

I = nominal transverse extent of the insert member

t = nominal thickness of the flexible sheet

$K_2$ = dimensional manufacturing and clearance tolerances (such as for example 0.0254 to 0.0762 (0.01/0.03'')).

With specific emphasis on curved insert member 14a, the preferred ratio of the radius of curvature to arc length of insert member 14a is about 0.9. Furthermore, the preferred ratio of the thickness to the transverse extent of insert members 14, 14a is about 0.09. As noted, the preferred ratio of the depth of the flex notch 44 to thickness t of members 14, 14a is about 0.5. In addition, the preferred ratio of the slot width (A) to the channel width (C) of channel member 12 is about 0.42. Further yet, the preferred ratio of the channel height (B) to the channel width (C) of channel member 12 is about 0.2; and the preferred ratio of the channel height (B) to the slot width (A) of channel member 12 is about 0.46. It should also be understood that dimension D, extending diagonally from the intersection 36 of sidewall 30a and bottom wall 20 to the smooth remote edge 34b of top wall 32, is less than the transverse or lateral extent (I) of insert members 14, 14a.

The relationship of channel member dimensions A, B and C is such that it will allow the insertion of not only a single sheet of flexible sheet 16 (which requires channel member 12 to accommodate a top and bottom layer of sheet 16 relative to wing portions 50a, 52a, as best seen in Fig. 7) but even of dual sheets which will of necessity provide two top and bottom layers of sheet 16 relative to the noted wing portions. Such a doubling can occur in the case of a lap splice between separate sheets 16, if such a splice falls within channel area 40, be it parallel with the longitudinal extent of channel member 12 or perpendicular thereto.

This is why in equation (2), namely $B = h + 4t + K_1$, pertaining to the nominal channel height (B), the multiplier 4 is used with factor t (nominal thickness of the flexible sheet). It is also within the scope of the invention to mechanically join two separate sheets 16 by overlapping same within at least a portion of the longitudinal extent of channel area 40, such as for example by overlapping such sheets in the area between insert member bottom surface 48 and channel bottom wall 20.

While the description relative to the method of mechanically securing sheet 16 in channel member 12, via an insert member, as depicted in Figs. 5, 6 and 7, will be made with reference to curved insert member 14a, it should be understood that the same description is of course also applicable to flat insert member 14. Turning first to Fig. 5, it depicts channel member 12 attached to any desired type of substrate 28 (best shown in Fig. 7), such as a roofing structure, via a plurality of fasteners 26. After flexible sheet or membrane 16 is placed over channel member 12, curved insert member 14a is temporarily elastically defomed into an inverted V-shape by pressing wing portions 50a, 52a together wherein the bottom surface 48a defines the inner surface of the inverted V. Insert member 14a, in its inverted V-shape, together with sheet 16 is then pushed or placed vertically into channel member 12 through central longitudinal opening 38 until sheet 16 touches channel member bottom wall 20 as shown in Fig. 6. Thereafter pressure is applied downwardly against the now-deformed flex notch 44a (forming the apex of the inverted V) to flatten or return the insert member 14a from its inverted V-shape to approximately its natural shape — either substantially flat with reference to insert member 14 or to the concave shape of curved insert member 14a as shown in Fig. 7. The latter may also take the form of being slightly flattened in the center (see Fig. 7) wherein each one of wing portions 50a, 52a however substantially retains its previous radius of curvature. The important thing is that after insert member 14, 14a is received within channel member 12, that it must either remain substantially flat or slightly concave since a convex curvature can cause it to be ejected from channel member 12 upon the application of sufficient tensile forces, either parallel and/or perpendicular to top wall 32, on either one or both of fabric ends 16a, 16b.

It is thought that the mode of operation of insert member 14a, according to the invention, consists of the fact that when a tensile force acts at one of fabric ends 16a, 16b, either parallel to or perpendicular to top wall 32, this tensile force is transmitted, by insert member 14a, acting as a beam, to the opposite end 54 of insert member 14a to thereby press its associated portion of fabric 16 against the inner surface of channel member wall portion 30a, 30b. The frictional forces present between these parts, when in contact with each other, prevents fabric 16 from sliding out of channel member 12 after insert member 14a is inserted. If perpendicular or opposed parallel tensile forces are applied on both fabric ends 16a, 16b, insert member 14a is drawn upward so that fabric 16 is frictionally retained between member 14a and the inner surfaces of top wall 32 and bottom wall portion 48, in at least the area below notch 44a, will retain fabric 16 against bottom wall 20.

It should be understood at this time that since the transverse extent I of insert members 14, 14a is greater than dimension D of channel member 12, the former cannot be inserted into channel 12 diagonally even by itself let alone with the addition of sheet 16. Of course, the subsequent diagonal removal is therefore also not possible. It is important to note however that even in the case of a sheet lap splice falling within channel area 40 there is no press or interference fit as such of sheet 16 and insert members 14, 14a relative to channel member 12. As best seen in Fig. 7 there can be a limited amount of lateral and/or vertical shifting of sheet 16 and members 14, 14a, within member 12. Therefore, the noted retention is due to frictional forces, not interference or press fitting.

It is also important to note that insert member flexible hinge notch 44, 44a not only aids in the temporary elastic deformation of insert member 14, 14a but also acts as a hinge member, after insertion into channel member 12, upon the application of the previously-noted tensile forces, thereby causing members 14, 14a to assume even more pronounced generally flat (member 14) or greater concave (member 14a) shapes, which in turn will enhance their retention capabilities within channel member 12.

The mechanical fastening system of the present invention finds specific utility in mechanically securing EPDM sheeting in flat roofing applications. However, from foregoing description, when read in the light of the several drawings, it is believed that those familiar with the art will readily recognize and appreciate the novel concepts and features of the present invention. Obviously, while the invention has been described in relation to only a limited number of embodiments, numerous variations, changes, substitutions and equivalents will present themselves to persons skilled in the art and may be made without necessarily departing from the scope and principles of the claims. As a result, the embodiments described herein are subject to various modifications, changes and the like without departing from the spirit and scope of the claims.

**Claims**

1. An attachment device (10) for mechanically securing at least one flexible elastomeric sheet (16) to the upper surface of a roof, said attachment device (10) comprising a substantially rigid channel member (12) and an insert member (14, 14a) for retaining at least one said elastomeric sheet (16) within said channel member (12) and over said roof, said channel member (12) having a generally rectangular cross-section (40) and a continuous central longitudinal slot-opening (38) arranged in the top wall (32) of said channel member (12), generally opposed side walls (30a, 30b) and means for receiving a fastening element to attach said channel member (12) to said upper roof surface, said channel member (12) having a width C which is defined by said opposed side walls (30a, 30b), said insert member (14) comprising retaining means for maintaining said at least one flexible elastomeric sheet (16) in said channel member (12), said insert member (14) being formed from a resilient material and having two outer edges (54) which define between them a lateral extent (l), said insert member (14) also comprising a central longitudinal flexible hinge notch (44a) in one surface which defines two adjacent insert member wing portions (50, 52) and which facilitates temporary elastic deformation of said insert member (14) from a first position in which said member (14) has a substantially flat unflexed natural shape into a second position in which said member has a generally inverted V-shape so that said edges (54) can be inserted, together with a portion of said at least one elastomeric sheet (16), through said slot (38) and into said channel member (12), characterized in that said insert member (14) and said longitudinal flexible hinge notch (44a) together comprising retaining means for maintaining said at least one elastomeric sheet (16) against an interior surface of said channel member (12) when said insert member (14) is substantially flattened into a third position in which the shape of said insert member (14) is returned approximately to said natural shape, thereby permitting lateral and vertical shifting of said insert member (14) and said at least one flexible sheet (16) within said channel member (12), and in that the lateral extent (l) of the insert member (14) being less than the width C of said channel member (12) when said insert member (14) is unflexed, and in that the dimension D, extending diagonally from the intersection (36) of sidewall (30a) and bottom wall (20) to the remote edge (34b) of the top wall, is less than the lateral extent (l) of insert member (14, 14a).

2. The attachment device of claim 1 wherein said channel member (12) has a substantially flat bottom wall (20), similarly projecting parallel side walls (30a, b) and a top wall (32) parallel to said bottom wall (20).

3. The attachment device of claim 2 wherein the opposite edges (34a, b) of said top walls (20), which define said central longitudinal slot (38) are smoothly contoured.

4. The attachment device of claim 1 wherein said central longitudinal flex notch (44a) is in the top surface (50a, 52a) of said insert member (14).

5. The attachment device of claim 1 wherein said insert member (14) is of generally rectangular form in a transverse cross section.

6. The attachment device of claim 1 wherein said insert member (14) is of generally curved form in a transverse cross section.

7. The attachment device of claim 6 wherein the curved form of said insert member (14) is concave in shape.

8. The attachment device of claim 7 wherein the ratio of the radius curvature to the arc length of said insert member (14) is about 0.9.

9. The attachment device of claim 1 wherein the ratio of the thickness to the transverse extent of said insert member (4) is about 0.09.

10. The attachment device of claim 1 wherein the ratio of the depth of said flex notch (44a) to the thickness of said insert member (14) is about 0.5.

11. The attachment device of claim 1 wherein the ratio of the slot width to the channel width of said channel member (12) is about 0.42.

12. The attachment device of claim 1 wherein the ratio of the channel height to the channel width of said channel member (12) is about 0.2.

13. The attachment device of claim 1 wherein the ratio of the channel height to the slot width of said channel member (12) is about 0.46.

14. The attachment device of claim 1 wherein the nominal channel height (B) complies with the equation:

$$B = h + 4t + K_1$$

wherein:

h = nominal thickness of the insert member
t = nominal thickness of the flexible sheet .
$K_1$ = dimensional manufacturing tolerance.

15. The attachment device of claim 1 wherein the nominal channel width (C) complies with the equation:

$$C = I + 4t + K_2$$

wherein:

I = nominal transverse extent of the insert member
t = nominal thickness of the flexible sheet
$K_2$ = dimensional manufacturing tolerance.

16. The attachment device of claim 1 wherein the nominal channel slot width (A) complies with the equation:

$$A = 2 \cdot I - C - K_3 h$$

wherein:

I = nominal transverse extent of the insert member
C = nominal channel width of the channel member
$K_3$ = experimentally determined dimensionless parameter related to the modulus of elasticity and stiffness of the material from which said insert member is made (dimensionless material constant of the insert member).

17. The attachment device of claim 1 further comprising two elastomeric sheets (16) having adjacent edge portions which are positioned within said channel member (12), both of said sheets (16) being maintained within said channel member (12) by said insert (14) said two elastomeric sheets (16) overlapping within said channel member (12).

**Patentansprüche**

1. Eine Befestigungsanordnung (10) zum mechanischen Befestigen mindestens eines flexiblen, elastomeren Blattes (16) an der oberen Fläche eines Daches, die ein im wesentlichen starres Kanalglied (12) und ein Einsatzglied (14, 14a) zum Halten mindestens einen elastomeren Blattes (16) innerhalb des Kanalgliedes (12) und über dem Dach aufweist, wobei das Kanalglied (12) einen im wesentlichen rechteckigen Querschnitt (40) und eine kontinuierliche mittige Längsschlitzöffnung (38) besitzt, die in der obersten Wandund (32) des Kanalgliedes (12) angeordnet ist, sowie generell gegenüberliegende Seitenwände (30a, 30b) und Mittel zur Aufnahme eines Befestigungselementes, um das Kanalglied (12) an der oberen Dachfläche anzubringen, wobei das Kanalglied (12) eine Breite C besitzt, die durch die gegenüberliegenden Seitenwände (30a, 30b) definiert ist, und wobei das Einsatzglied (14) Halterungsmittel zum Halten mindestens eines flexiblen elastomeren Blattes (16) im Kanalglied (12) aufweist, und wobei das Einsatzglied (14) aus einem nachgiebigen Material geformt ist, und zwei Außenkanten (54) besitzt, die die Breite festlegen und wobei das Einsatzglied (14) ebenfalls eine mittige, längliche flexible Gelenknut (44a) in einer Fläche besitzt, die die beiden angrenzenden Flügelteile (50, 52) des Einsatzgliedes bilden und die die vorübergehende elastische Deformation des Einsatzgliedes (14) aus einer ersten Stellung, in der das Glied (14) eine im wesentlichen ebene, nichtabgebogene natürliche Form aufweist, in eine zweite Stellung erleichtert, in der das Glied eine im wesentlichen invertierte V-Form aufweist, so daß die Kanten (54) zusammen mit einem Teil mindestens eines elastomeren Blattes (16) durch den Schlitz (38) in das Kanalglied (12) eingesetzt werden können, dadurch gekennzeichnet, daß das Einsatzglied (14) und die längliche, flexible Gelenknut (44a) gemeinsam Halterungsmittel umfassen, um mindestens ein elastomeres Blatt (16) gegen eine Innenfläche des Kanalgliedes (12) zu drücken, wenn das Einsatzglied (14) im wesentlichen in einer dritten Position geebnet ist, in der die Form des Einsatzgliedes (14) annähernd in seine natürliche Form zurückkehrt, wodurch ein seitliches vertikales Verschieben des Einsatzgliedes (14) und mindestens eines flexiblen Blattes (16) innerhalb des Kanalgliedes (12) ermöglicht wird, und daß die Breitenausmaß (I) des Einsatzgliedes (14) geringer ist als die Breite C des Kanalgliedes (12), wenn das Einsatzglied (14) nicht ab- oder umgebogen ist, und daß die Dimension D, die sich diagonal von der Ecke (36) der Seitenwand (30a) und der Bodenwand (20) zur entfernten Kante (34b) der oberen Wand geringer ist, als das Breitenausmaß (I) des Einsatzgliedes (14, 14a).

2. Befestigungsanordnung nach Anspruch 1, dadurch gekennzeichnet, daß das Kanalglied (12) eine im wesentlichen ebene Bodenwand (20) besitzt, in gleicher Weise hervorragende parallele Seitenwände (30a, 30b) und obere Wände (32), die zur Bodenwand (20) parallel verlaufen.

3. Befestigungsanordnung nach Anspruch 2, dadurch gekennzeichnet, daß die gegenüberliegenden Kanten (34a, 34b) der oberen Wandungen (20), die den mittigen Längsschnitt (38) ausbilden, glatt konturiert sind.

4. Befestigungsanordnung nach Anspruch 1, dadurch gekennzeichnet, daß die mittige längliche, flexible Nut (44a) in der oberen Fläche (50a, 52a) des Einsatzgliedes (14) ist.

5. Befestigungsanordnung nach Anspruch 1, dadurch gekennzeichnet, daß das Einsatzglied (14) allgemein rechteckige Form im querverlaufenden Querschnitt besitzt.

6. Befestigungsanordnung nach Anspruch 1, dadurch gekennzeichnet, daß das Einsatzglied (14) allgemein gebogene Form im querverlaufenden Querschnitt besitzt.

7. Befestigungsanordnung nach Anspruch 6, dadurch gekennzeichnet, daß die gebogene Form des Einsatzgliedes (14) in der Form konkav ist.

8. Befestigungsanordnung nach Anspruch 7, dadurch gekennzeichnet, daß das Verhältnis der Radiuskrümmung zur Bogenlänge des Einsatzgliedes (14) etwa 0,9 beträgt.

9. Befestigungsanordnung nach Anspruch 1, dadurch gekennzeichnet, daß das Verhältnis der Dicke zum querverlaufenden Ausmaß des Einsatzgliedes (14) etwa 0,09 beträgt.

10. Befestigungsanordnung nach Anspruch 1, dadurch gekennzeichnet, daß das Verhältnis der Tiefe der flexiblen Nut (44a) zur Dicke des Einsatzgliedes (14) etwa 0,5 beträgt.

11. Befestigungsanordnung nach Anspruch 1, dadurch gekennzeichnet, daß das Verhältnis der Schlitzbreite zur Kanalbreite des Kanalgliedes (12) etwa 0,42 beträgt.

12. Befestigungsanordnung nach Anspruch 1, dadurch gekennzeichnet, daß das Verhältnis der Kanalhöhe zur Kanalbreite des Kanalgliedes (12) etwa 0,2 beträgt.

13. Befestigungsanordnung nach Anspruch 1, dadurch gekennzeichnet, daß das Verhältnis der Kanalhöhe zur Schlitzbreite des Kanalgliedes (12) etwa 0,46 beträgt.

14. Befestigungsanordnung nach Anspruch 1, dadurch gekennzeichnet, daß die nominale Kanalhöhe (B) mit der Gleichung übereinstimmt:

$$B = h + 4t + K_1,$$

worin

h = nominale Dicke des Einsatzgliedes
t = nominale Dicke des flexiblen Blattes
$K_1$ = dimensionale Herstellungstoleranz
ist.

15. Befestigungsanordnung nach Anspruch 1, dadurch gekennzeichnet, daß die nominale Kanalbreite (C) mit der Gleichung übereinstimmt:

$$C = I + 4t + K_2$$

worin

I = nominales Breitenausmaß des Einsatzgliedes
t = nominale Dicke des flexiblen Blatte
$K_2$ = dimensionale Herstellungstoleranz
ist.

16. Befestigungsanordnung nach Anspruch 1, dadurch gekennzeichnet, daß die nominale Kanalschlitzbreite (A) mit der Gleichung übereinstimmt:

$$A = 2 . I—C—K_3 h$$

worin

I = nominales Breitenausmaß des Einsatzgliedes,
C = nominale Kanalbreite des Kanalgliedes
$K_3$ = experimentell ermittelter dimensionsloser Parameter, der sich auf den Elastizitätsmodul und die Steifheit des Materials bezieht, aus dem das Einsatzglied hergestellt worden ist (dimensionslose Materialkonstante des Einsatzgliedes).

17. Befestigungsanordnung nach Anspruch 1, ferner gekennzeichnet durch zwei elastomere Blätter (16), die benachbarte Kantenteile besitzen, die innerhalb des Kanalgliedes (12) angeordnet sind, wobei beide Blätter (16) durch den Einsatz (14) innerhalb des Kanalgliedes (12) gehalten werden, und wobei die beiden elastomeren Blätter (16) innerhalb des Kanalgliedes (12) überlappen.

**Revendications**

1. Dispositif (10) de fixation pour assujettir mécaniquement au moins une feuille élastomérique flexible (16) à la surface supérieure d'un toit, ledit dispositif (10) de fixation comprenant un élément profilé sensiblement rigide (12) et un élément rapporté (14, 14a) pour retenir au moins une des feuilles élastomériques (16) à l'intérieur dudit élément profilé (12) et sur ledit toit, ledit élément profilé (12) présentant une section transversale globalement rectangulaire (40) et une ouverture allongée longitudinale centrale continue (38) ménagée dans la paroi supérieure (32) dudit élément profilé (12), des parois latérales globalement opposées (30a, 30b) et des moyens destinés à recevoir un élément de fixation pour attacher ledit élément profilé (12) à ladite surface supérieure du toit, ledit élément profilé (12) ayant une largeur C qui est définie par lesdites parois latérales opposées (30a, 30b), ledit élément rapporté (14) comprenant des moyens de retenue destinés à maintenir ladite ou lesdites feuilles élastomériques flexibles (16) dans ledit élément profilé (12), ledit élément rapporté (14) étant réalisé en une matière élastique et ayant deux bords extérieurs (54) qui définissent entre eux une étendue latérale (I), ledit élément rapporté (14) présentant également une encoche centrale longitudinale (44a) de charnière flexible ménagée dans une première surface, qui définit deux parties d'ailes adjacentes (50, 52) de l'élément rapporté et qui facilite une déformation élastique temporaire dudit élément rapporté (14) d'une première position dans laquelle ledit élément (14) présente une forme naturelle sensiblement plate et non fléchie à une seconde position dans laquelle ledit élément présente une forme globalement en V retourné afin que lesdits bords (54) puissent être insérés, avec une partie de ladite ou desdites feuilles élastomériques (16), dans ladite ouverture allongée (38) et à l'intérieur dudit élément profilé (12), caractérisé en ce que ledit élément rapporté (14) et ladite encoche longitudinale (44a) de charnière flexible constituent ensemble des moyens de retenue destinés à maintenir ladite ou lesdites feuilles élastomériques (16) contre une surface intérieure dudit élément profilé (12) lorsque ledit élément rapporté (14) est sensiblement aplati en une troisième position dans laquelle la forme dudit élément rapporté (14) est revenue approximativement à ladite forme naturelle, afin de permettre un déplacement latéral et vertical dudit élément rapporté (14) et de ladite ou desdites feuilles flexibles (16) à l'intérieur dudit élément profilé (12), et en ce que l'étendue latérale (I) dudit élément rapporté (14) est inférieure à la largeur C dudit élément profilé (12) lorsque ledit élément rapporté (14) n'est pas fléchi, et en ce que la dimension D, s'étendant diagonalement de l'intersection (36) d'une paroi latérale (30a) et du fond (20) au bord éloigné (34b) de la paroi supérieure, est inférieure à l'étendue latérale (I) de l'élément rapporté (14, 14a).

2. Dispositif de fixation selon la revendication 1, dans lequel ledit élément profilé (12) comporte une paroi de fond sensiblement plate (20), des parois latérales parallèles (30a, b) faisant saillie de façon similaire et des parois supérieures (32) parallèles à ladite paroi de fond (20).

3. Dispositif de fixation selon la revendication 2, dans lequel les bords opposés (34a, b) desdites parois supérieures (20), qui définissent ladite ouverture allongée longitudinale centrale (38), ont un contour adouci.

4. Dispositif de fixation selon la revendication 1, dans lequel ladite encoche longitudinale centrale (44a) de flexion est ménagée dans la surface supérieure (50a, 52a) dudit élément rapporté (14).

5. Dispositif de fixation selon la revendication 1, dans lequel ledit élément rapporté (14) est de forme globalement rectangulaire en section transversale.

6. Dispositif de fixation selon la revendication 1, dans lequel ledit élément rapporté (14) est de forme globalement incurvée en section transversale.

7. Dispositif de fixation selon la revendication 6, dans lequel la forme incurvée dudit élément rapporté (14) est une forme concave.

8. Dispositif de fixation selon la revendication 7, dans lequel le rapport du rayon de courbure à la longueur de l'arc dudit élément rapporté (14) est d'environ 0,9.

9. Dispositif de fixation selon la revendication 1, dans lequel le rapport de l'épaisseur à l'étendue transversale dudit élément rapporté (14) est d'environ 0,09.

10. Dispositif de fixation selon la revendication 1, dans lequel le rapport de la profondeur de ladite encoche de flexion (44a) à l'épaisseur dudit élément rapporté (14) est d'environ 0,5.

11. Dispositif de fixation selon la revendication 1, dans lequel le rapport de la largeur de l'ouverture allongée à la largeur de la rainure dudit élément profilé (12) est d'environ 0,42.

12. Dispositif de fixation selon la revendication 1, dans lequel le rapport de la hauteur de la rainure à la largeur de la rainure dudit élément profilé (12) est d'environ 0,2.

13. Dispositif de fixation selon la revendication 1, dans lequel le rapport de la hauteur de la rainure à la largeur de l'ouverture allongée dudit élément profilé (12) est d'environ 0,46.

14. Dispositif de fixation selon la revendication 1, dans lequel la hauteur nominale (B) de la rainure satisfait l'équation:

$$B = h + 4t + K_1$$

dans laquelle:
  h = épaisseur nominale de l'élément rapporté
  t = épaisseur nominale de la feuille flexible
  $K_1$ = tolérance de dimension à la fabrication.

15. Dispositif de fixation selon la revendication 1, dans lequel la largeur nominale C de la rainure satisfait l'équation:

$$C = I + 4t + K_2$$

dans laquelle:
  I = étendue transversale nominale de l'élément rapporté
  t = épaisseur nominale de la feuille flexible
  $K_2$ = tolérance de dimension à la fabrication.

16. Dispositif de fixation selon la revendication 1, dans lequel la largeur nominale (A) de l'ouverture allongée du profilé satisfait l'équation:

$$A = 2I - C - K_3 h$$

dans laquelle:
  I = étendue transversale nominale de l'élément rapporté
  C = largeur nominale de la rainure de l'élément profilé
  $K_3$ = paramètre sans dimension, déterminé expérimentalement, lié au module d'élasticité et à la raideur de la matière dont est constitué ledit élément rapporté (constante sans dimension de la matière de l'élément rapporté).

17. Dispositif de fixation selon la revendication 1, comprenant en outre deux feuilles élastomériques (16) comportant des parties de bords adjacentes qui sont positionnées à l'intérieur dudit élément profilé (12), lesdites deux feuilles (16) étant maintenues à l'intérieur dudit élément profilé (12) par ledit élément rapporté (14), lesdites deux feuilles élastomériques (16) se chevauchant à l'intérieur dudit élément profilé (12).

FIG. 1

0 132 500

FIG. 2a

FIG. 2b

FIG. 3

FIG. 4

FIG.5

FIG.6

FIG.7